# EUROPÄISCHE PATENTANMELDUNG

(11) **EP 1 614 586 A2**
(43) Veröffentlichungstag der Anmeldung: **11.01.2006**
(21) Anmeldenummer: 05106004.4
(22) Anmeldetag: 01.07.2005
(51) Int. Cl.: B60Q 3/04, B29C 45/16

(54) **Beleuchtete Anzeigeeinrichtung für Kraftfahrzeuge**

(30) Priorität: 05.07.2004 DE 102004032631
(71) Anmelder: Hella KGaA Hueck & Co., 59552 Lippstadt (DE)
(72) Erfinder: Müller, Bernd, 79650 Schopfheim (DE); Franzbach, Theo, 59590 Geseke (DE)

(57) **Zusammenfassung**

Eine optische Anzeigeeinrichtung, insbesondere zum Einsatz in einem Kraftfahrzeug, hat ein Trägerteil (2), das ein Symbol oder dergleichen Dekor aufweist. Zum Hinterleuchten des Dekors hat die Anzeigeeinrichtung mindestens ein Leuchtmittel, Die Wandung des Trägerteils (2) ist im Bereich des Dekors lichtdurchlässig und in dem seitlich an das Dekor angrenzenden Bereich lichtundurchlässig. Der lichtdurchlässige Wandungsbereich des Trägerteils (2) hat an seiner Rückseite mindestens eine im Abstrahlbereich des Leuchtmittels angeordnete Lichteintrittsfläche (6), die bezüglich ihrer Kontur an die Kontur des Dekors formangepasst ist. Der lichtdurchlässige Wandungsbereich weist an voneinander beabstandeten Stellen unterschiedliche Wandstärken auf. Die Wandstärke des seitlich zu dem lichtdurchlässigen Wandungsbereich benachbarten lichtundurchlässigen Wandungsbereichs ist etwa konstant oder weist geringere Wandstärkenunterschiede aufweist als der lichtdurchlässige Wandungsbereich.

## Beschreibung

Die Erfindung betrifft eine optische Anzeigeeinrichtung, insbesondere zum Einsatz in einem Kraftfahrzeug, mit einem Trägerteil, das ein Symbol oder dergleichen Dekor aufweist, und mit mindestens einem Leuchtmittel zum Hinterleuchten des Dekors, wobei die Wandung des Trägerteils im Bereich des Dekors lichtdurchlässig.

Ein derartige Anzeigeeinrichtung ist aus DE 199 34 951 A1 bekannt. Dabei weist das Trägerteil einen lichtdurchlässigen, als Lichtleiterelement gebildeten Wandungsbereich auf, der von einem rahmenförmigen, lichtundurchlässigen Wandungsbereich umgrenzt ist. Das Lichtleiterelement hat mehrere abgewinkelt zueinander angeordnete Bereiche, die hinter dem Symbol und den seitlich dazu benachbarten Bereichen des Trägerteils angeordnet sind. Das Lichtleitelement ist mit einer Lichteintrittsfläche einem Leuchtmittel zugewandt, das hinter dem Trägerteil angeordnet ist und von diesem überdeckt wird. Auf das Lichtleiterelement ist an der in Gebrauchsstellung dem Benutzer zugewandten Seite eine lichtdurchlässige Kunststofffolie angeordnet, die das lichtdurchlässige Symbol aufweist. Die Kunststofffolie ist derart auf das Lichtielterelement aufgebracht, dass eine Lichtleitung von der Lichteintrittsfläche des Lichtleiterelements durch das Lichtleiterelement zu dem lichtdurchlässigen Symbol der Kunststofffolie erfolgt, so dass dieses hinterleuchtet wird. Das Trägerteil wird in einem mehrstufigen Verfahren gefertigt, bei dem zunächst das Lichtleiterelement in einem Spritzgussprozess aus einem glasklaren Kunststoffmaterial hergestellt und dann bis zum Erreichen der Formstabilität abkühlt wird. Danach wird die Kunststofffolie auf eine Fläche des Lichtleiterelements aufgebracht. In einem weiteren Schritt wird anschließend die Kunststofffolie gegen das Lichtleiterelement druckbeaufchlagt, um es materialschlüssig mit diesem zu verbinden. Das so hergestellte Teil wird danach in einer Spritzgussform teilweise mit einem lichtundurchlässigen Kunststoff um- bzw. hinterspritz, so dass ein lichtdichtes Rahmenelement gebildet wird. Die Herstellung der Anzeigeeinrichtung ist relativ kompliziert und aufwändig. Ungünstig ist außerdem, das der Werkstoff des Lichtleiterelements zur Erzielung einer gewünschten Lichtverteilung für die Ausleuchtung des Symbols eine relativ komplizierte Geometrie mit an voneinander beabstandeten Stellen unterschiedlichen Wandstärken aufweist. Dies führt dazu, dass das Lichtielterelement nach dem Entformen aus dem Spritzgusswerkzeug ungleichmäßig abkühlt. An der dem Benutzer zugewandten Vorderseite des Trägerteils können dadurch Einfallstellen oder dergleichen Unregelmäßigkeiten entstehen, die als störend empfunden werden. Außerdem kann am Rand der Kunststofffolie an der Übergangsstelle zu dem Rahmenelement eine Trennlinie sichtbar sein, die vom Benutzer ebenfalls als störend empfunden wird.

Es besteht deshalb die Aufgabe, eine optische Anzeigeeinrichtung der eingangs genannten Art zu schaffen, eine gewünschte Lichtverteilung für die Ausleuchtung des Dekors aufweist, und bei der an der Vorderseite des Trägerteils eine vom Benutzer als störend empfundene Einfallstelle vermieden wird.

Diese Aufgabe wird durch eine optische Anzeigeeinrichtung gelöst, die ein Trägerteil, das ein Symbol oder dergleichen Dekor und mit mindestens ein Leuchtmittel zum Hinterleuchten des Dekors hat, wobei die Wandung des Trägerteils im Bereich des Dekors lichtdurchlässig und in dem seitlich an das Dekor angrenzenden Bereich lichtundurchlässig ist, wobei der lichtdurchlässige Wandungsbereich des Trägerteils an seiner Rückseite mindestens eine im Abstrahlbereich des Leuchtmittels angeordnete Lichteintrittsfläche hat, die im Wesentlichen in dem von dem Dekor überdeckten Bereich angeordnet ist und bezüglich ihrer Kontur an die Kontur des Dekors formangepasst ist, wobei der lichtdurchlässige Wandungsbereich an voneinander beabstandeten Stellen unterschiedliche Wandstärken aufweist, und wobei die Wandstärke des seitlich dazu benachbarten lichtundurchlässigen Wandungsbereichs etwa konstant ist oder geringere Wandstärkenunterschiede aufweist als der lichtdurchlässige Wandungsbereich.

In vorteilhafter Weise ist also die für die Erzielung einer vorgegebenen Lichtverteilung erforderliche veränderliche Wandstärke des Trägerteils im Wesentlichen nur in dem hinter dem Symbol oder Dekor befindlichen Bereich des Trägerteils vorgesehen, so dass bei einem als Kunststoffspritzgussteil gefertigten Trägerteil an den seitlich neben dem Symbol oder Dekor im Sichtbereich des Benutzers befindlichen Bereich der Oberfläche des Trägerteils beim Abkühlen des aus dem Formwerkzeug entnommen Spritzgussteils praktisch keine für den Benutzer sichtbare Einfallstelle auftritt. Bei der Konstruktion oder Fertigung des Trägerteils kann der Wanddickenverlauf des Trägerteils im Bereich des Symbols in Abhängigkeit von der jeweils an dem Symbol oder Dekor gewünschten Lichtverteilung gestaltet werden. Unter einer Lichteintrittsfläche, die im Wesentlichen in dem von dem Dekor überdeckten Bereich angeordnet ist, wird eine Lichteintrittsfläche verstanden, die vollständig oder zumindest zu einem überwiegenden Teil, der vorzugsweise mindestens 60%, ggf 70%, insbesondere 80% und bevorzugt mindestens 90% der dem Dekor insgesamt zugeordneten Lichteintrittsfläche beträgt, verstanden. Die Außen- und/oder Innenkontur der Lichteintrittsfläche ist an die Außen- und/oder Innenkontur des Symbols oder Dekors formangepasst und stimmt vorzugsweise etwa mit dieser überein. Die Außen- und/oder Innenkontur der Lichteintrittsfläche kann aber auch gegenüber der Außen- und/oder Innenkontur des Symbols oder Dekors gegebenenfalls etwas vergrößert, verkleinert, verzerrt und/oder geglättet sein. Unter einem Symbol werden auch Buchstaben und/oder Zahlen verstanden. Das Symbol kann auch eine Abbildung eines Gegenstands sein, wobei diese Abbildung gegebenenfalls Konturlinien des Gegenstands enthalten kann.

Bei einer bevorzugten Ausführungsform der Erfindung besteht der lichtdurchlässige Wandungsbereich aus einem diffustransparenten Werkstoff, wobei die optische Dämpfung des Werkstoffs und der Verlauf der Wandstärke in dem lichtdurchlässigen Wandungsbereich derart auf die Abstrahlcharakteristik des Leuchtmittels und die Lage des Leuchtmittels relativ zu der Lichteintrittsfläche abgestimmt sind, dass das Symbol oder Dekor von dem Licht des Leuchtmittels etwa homogen ausgeleuchtet wird. Das Symbol oder Dekor ist dann bei Dunkelheit besonders gut ablesbar, auch wenn das Leuchtmittel eine asymmetrische Abstrahlcharakteristik aufweist und/oder außermittig hinter dem Symbol oder Dekor angeordnet ist.

Vorteilhaft ist, wenn der lichtdurchlässige Wandungsbereich an wenigstens einer Stelle eine größere Wandstärke aufweist als der seitlich an das Dekor angrenzende Randbereich des lichtundurchlässigen Wandungsbereichs. Dabei ist die Stelle mit der größeren Wandstärke bevorzugt an einem Ort angeordnet, an dem die Lichtstärke des von dem Leuchtmütel abgestrahlten Lichtbündels größer ist als der Wert der über die Lichteintrittsfläche gemittelten Lichtstärke.

Bei einer zweckmäßigen Ausgestaltung der Erfindung weist der lichtdurchlässige Wandungsbereich an wenigstens einer Stelle eine geringere Wandstärke auf als der seitlich an das Dekor angrenzende Randbereich des lichtundurchlässigen Wandungsbereichs. Dabei ist die Stelle mit der geringeren Wandstärke bevorzugt an einem Ort angeordnet, an dem die Lichtstärke des von dem Leuchtmittel abgestrahlten Lichtbündels kleiner ist als der Wert der über die Lichteintrittsfläche gemittelten Lichtstärke.

Bei einer bevorzugten Ausführungsform der Erfindung ist die Lichteintrittsfläche stufen- oder reliefförmig ausgebildet, wobei die Oberflächenebenen der Stufen oder des Reliefs vorzugsweise etwa parallel zur Erstreckungsebene des Trägerteils angeordnet sind. Die Geometrie der Lichteintrittsfläche kann dann bei der Konstruktion oder Fertigung der optischen Anzeigeeinrichtung auf relativ einfache Weise beispielsweise mit Hilfe eines Computers an die jeweils im Bereich des Symbols oder Dekors gewünschte Lichtverteilung angepasst und beispielsweise mit Hilfe eines Fräswerkzeugs als Negativform in die Innenhöhlung eines entsprechenden Spritzguss-Formwerkzeugs eingebracht werden.

Bei einer zweckmäßigen Ausgestaltung der Erfindung sind die Ebenen der Stufen und/oder des Reliefs in unterschiedlichen Abständen zueinander angeordnet. Dadurch kann das Symbol oder das Dekor noch gleichmäßiger ausgeleuchtet werden.

Vorteilhaft ist, wenn das Dekor mindestens einen streifenförmigen Abschnitt aufweist wenn das Trägerteil an seiner Rückseite eine dem streifenförmigen Abschnitt gegenüberliegende und dessen Verlauf folgende stegförmige Ausformung aufweist, und wenn die Oberfläche der Ausformung die Lichteintrittsfläche bildet. Dabei kann die Höhe des Stegs, je nach dem, wie das von dem Leuchtmittel abgestrahlte Licht beim Durchtritt durch den Steg gedämpft werden soll, variieren. Der streifenförmige Abschnitt des Dekors kann beispielsweise eine Konturlinie des Symbols und/oder eines abzubildenden Gegenstands sein.

Es ist aber auch möglich, dass das Trägerteil an seiner Rückseite eine dem streifenförmigen Abschnitt gegenüberliegende und dessen Verlauf folgende nuten- oder grabenförmige Einformung aufweist, und dass die Oberfläche der Einformung die Lichteintrittsfläche bildet. Bei dieser Lösung kann die Tiefe der Einformung in Abhängigkeit von der an der betreffenden Stelle beim Lichtdurchtritt durch das Trägerteil gewünschten Dämpfung variieren. Gegebenenfalls ist es sogar möglich, dass die nuten- oder grabenförmige Einformung eine Fortsetzung oder Verlängerung einer stegförmigen Ausformung bildet.

Bei einer bevorzugten Ausführungsform der Erfindung weist das Trägerteil einen Grundkörper aus transparentem Kunststoff auf, der zur Bildung des lichtundurchlässigen Wandungsbereichs an seiner Oberfläche bereichsweise mit mindestens einer lichtundurchlässigen Beschichtung versehen ist, die in dem lichtdurchlässigen Wandungsbereich unterbrochen ist. Die Herstellung des Trägerteils kann dann in der Weise erfolgen, dass zunächst der Grundkörper als Spritzgussteil aus einem vorzugsweise diffustransparenten Kunststoff hergestellt wird, der Grundkörper dann ganzflächig mit der Beschichtung versehen wird und die Beschichtung danach, an den Stellen, an denen das Trägerteil lichtdurchlässig sein soll, von dem Grundkörper vorzugsweise mit Hilfe eines Laser- oder Energiestrahls abgetragen wird.

Bei einer zweckmäßigen Ausgestaltung der Erfindung ist das Trägerteil als Betätigungselement für einen Taster oder Schalter ausgebildet, wobei das Trägerteil bewegbar mit einem Gehäuseteil verbunden ist. Dabei können in der Innenhöhlung des Gehäuseteils die elektrischen Komponenten des Tasters- oder Schalters und das Leuchtmittel angeordnet sein.

Nachfolgend sind Ausführungsbeispiel der Erfindung anhand der Zeichnung näher erläutert. Es zeigen:
- Fig. 1: einen Querschnitt durch eine optische Anzeigeeinrichtung, die an einem Trägerteil ein mit Hilfe eines Leuchtmittels hinterleuchtbares Symbol aufweist,
- Fig. 2: eine Aufsicht auf die Vorderseite des Trägerteils, welche das Symbol erkennen lässt,
- Fig. 3: eine dreidimensionale Ansicht des Trägerteils, wobei an der Rückseite des Trägerteils ein Relief erkennbar ist, wobei die Geometrie der Oberfläche des Trägerteils durch Netzlinien verdeutlicht ist, und
- Fig. 4: eine Teil-Seitenansicht des in Fig. 3 gezeigten Trägerteils,

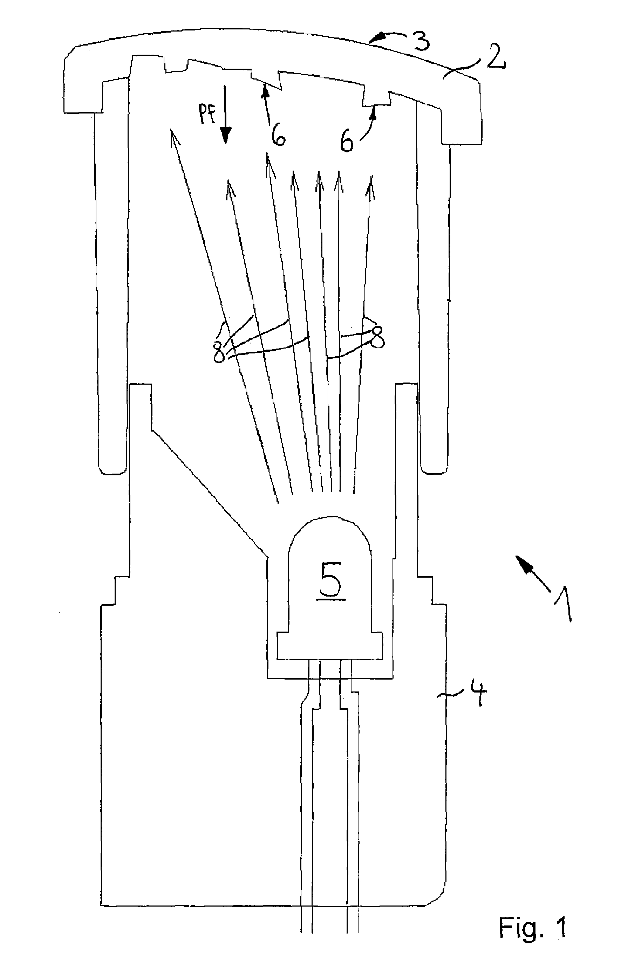

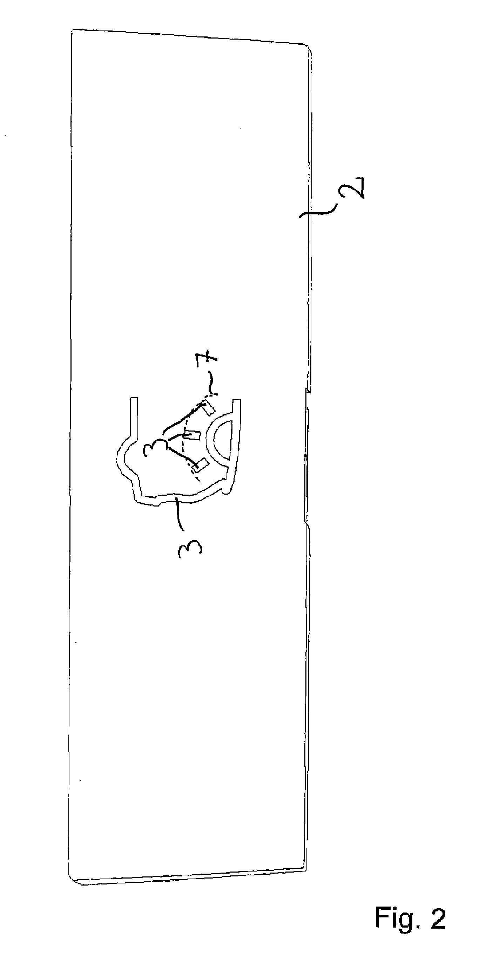

Eine in Fig. 1 im ganzen mit 1 bezeichnete optische Anzeigeeinrichtung für ein Kraftfahrzeug weist ein Trägerteil 2 auf, das an seiner Vorderseite ein Symbol oder dergleichen Dekor 3 hat. In Fig. 2 ist erkennbar, dass das Dekor 3 mehrere streifenförmige Abschnitte hat, von denen mindestens einer einen von einer geraden Linie abweichenden, gekrümmten und/oder abgewinkelten Verlauf aufweist.

Das Trägerteil 2 ist an einem Gehäuseteil 4 angeordnet und als etwa kappenförmiges Betätigungselement für einen Schalter oder Taster ausgebildet. Das Trägerteil 2 ist zum Betätigen des Schalters oder Tasters aus einer in Fig. 1 gezeigten Ruhestellung gegen eine Rückstellkraft in Richtung des Pfeils Pf relativ zu dem Gehäuseteil 4 auslenkbar. Das Trägerteil 2 hat eine etwa rechteckige Außenkontur. An seinem Außenrand weist das Trägerteil 2einen etwa kragenförmigen Verstär kungsbereich auf, der an den Längsseiten des Trägerteils 2 jeweils etwa mittig eine Unterbrechungsstelle hat.

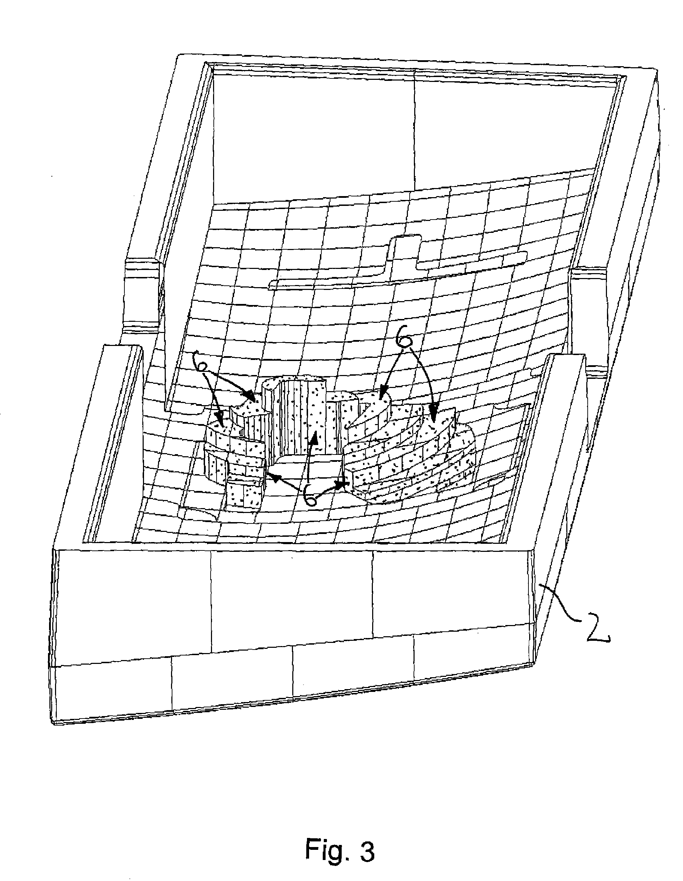

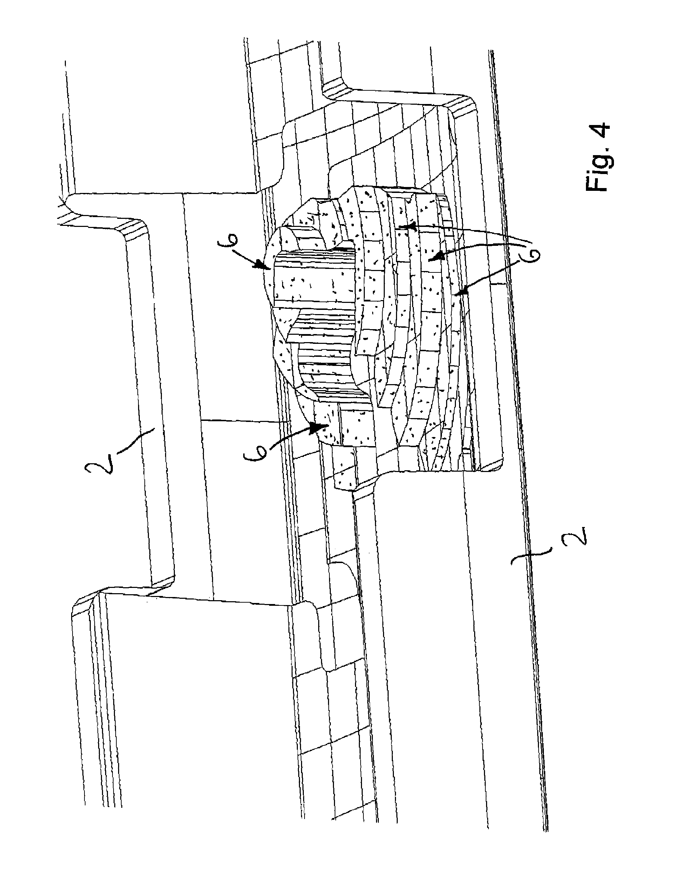

Zum Hinterleuchten des Dekors 3 ist hinter dem Trägerteil 2 ein als Leuchtdiode ausgebildetes Leuchtmittel 5 angeordnet. Die Wandung des Trägerteils 2 ist im Bereich des Dekors 3 lichtdurchlässig und in den das Dekor umgrenzenden Bereichen lichtundurchlässig. Dies wird dadurch erreicht, dass das Trägerteil 2 einen diffustransparenten, für das Licht des Leuchtmittels 5 durchlässigen Grundkörper aufweist, der an seiner Oberfläche, an den Stellen, an denen das Trägerteil 2 lichtundurchlässig ist, eine lichtundurchlässige Beschichtung aufweist, beispielsweise eine Lackschicht. Im Bereich des Symbols weist die Lackschicht beidseits des Trägerteils 2 Unterbrechungen auf, die in Fig. 3 und 4 durch eine Punktierung angedeutet sind.

In Fig. 2 und 3 ist erkennbar, der lichtdurchlässige Wandungsbereich des Trägerteils an seiner Rückseite mindestens eine im Abstrahlbereich des Leuchtmittels angeordnete Lichteintrittsfläche 6 hat, die bezüglich ihrer Außenkontur an die Außenkontur des Dekors 3 formangepasst ist. Durch einen Vergleich von Fig. 3 und 4 einerseits mit Fig. 2 andererseits wird deutlich, dass die die Außenkontur der Lichteintrittsfläche 6 im Wesentlichen der Außenkontur des Dekors 3 folgt. Dabei stimmt die senkrechte Projektion der Außenkonturlinie der Lichteintrittsfläche 6 auf die Erstreckungsebene des Trägerteils 3 in etwa mit der der senkrechten Projektion der Außenkonturlinie des Dekors 3 auf diese Ebene überein.

Ein erster Abschnitt der Innenkontur der Lichteintrittsfläche 6 folgt einem entsprechenden, in Fig. 2 in der linken Bildhälfte dargestellten Abschnitts des Dekors 3. Ein zweiter Abschnitt der Innenkontur der Lichteintrittsfläche 6 folgt einer Hüllkurve 7, welche die Enden der drei kurzen streifenförmigen Bereiche des Dekors 3 miteinander verbindet.

In Fig. 1 ist erkennbar, dass das Leuchtmittel 5 außermittig hinter dem Dekor 3 angeordnet ist, Dadurch wird die Seite der Lichteintrittsfläche 6, die näher an dem Leuchtmittel 5 angeordnet ist, stärker beleuchtet als die gegenüberliegende, von dem Leuchtmittel 5 entfernte Seite der Lichteintrittsfläche 6. In Fig. 1 sind schematisch einige Lichtstrahlen 8 eines von dem Leuchtmittel abgestrahlten Lichtbündels durch Pfeile markiert. Deutlich ist erkennbar, dass die Lichtstrahlen 8 auf der rechten Seite der Lichteintrittsfläche 6 eine größere Dichte aufweisen als auf der linken Seite.

Um trotz dieser ungleichmäßigen Rückseitenbeieuchtung des Trägerteils 2 an der Vorderseite des Trägerteils 2 eine homogene Ausleuchtung des Dekors 3 zu erzielen, ist die Lichteintrittsfläche 6 derart stufen- bzw. reliefförmig ausgebildet ist, dass der lichtdurchlässige Wandungsbereich des Trägerteils 2 an voneinander beabstandeten Stellen unterschiedliche Wandstärken aufweist. Dabei ist die Wandstärke an Stellen, an denen das auf die Lichteintrittsfläche 6 auftreffende Lichtbündel des Leuchtmittels 5 eine hohe Lichtstärke aufweist, größer als an Stellen, an denen die Lichtstärke gering ist, so dass das Lichtbündel beim Durchtritt durch das Trägerteil im Bereich einer großen Wandstärke stärker gedämpft wird als im Bereich einer geringen Wandstärke. In Fig. 4 ist erkennbar, dass gekennzeichnet, dass die Ebenen der Stufen des Reliefs in unterschiedlichen Abständen zueinander angeordnet sind, die Höhe der einzelnen Stufen also unterschiedlich gewählt ist. Das Relief ist nur im Bereich des Dekors 3 angeordnet und weist die gleiche oder eine ähnliche Form auf, wie das Dekor 3.

In den das Dekor 3 umgrenzenden lichtundurchlässigen Wandungsbereichen des Trägerteils 2 ist die Wandstärke dagegen weitgehend konstant und geringer als im Bereich der Lichteintrittsfläche 6. Dadurch wird in diesem Wandungsbereich beim Abkühlen des als Kunststoffspritzgussteil hergestellten Grundkörpers für das Trägerteil 2 die Bildung einer an der Vorderseite des Trägerteils sichtbaren Einfallstelle vermieden.

Die optische Anzeigeeinrichtung 1 hat also ein Trägerteil 2, das ein Symbol oder dergleichen Dekor 3 aufweist. Zum Hinterleuchten des Dekors 3 hat die Anzeigeeinrichtung 1 mindestens ein Leuchtmittel 5. Die Wandung des Trägerteils 2 ist im Bereich des Dekors 3 lichtdurchlässig und in dem seitlich an das Dekor 3 angrenzenden Bereich lichtundurchlässig. Der lichtdurchlässige Wandungsbereich des Trägerteils 2 hat an seiner Rückseite mindestens eine im Abstrahlbereich des Leuchtmittels 5 angeordnete Lichteintrittsfläche 6, die bezüglich ihrer Kontur an die Kontur des Dekors 3 formangepasst ist. Der lichtdurchlässige Wandungsbereich weist an voneinander beabstandeten Stellen unterschiedliche Wandstärken auf Die Wandstärke des seitlich zu dem lichtdurchlässigen Wandungsbereich benachbarten lichtundurchlässigen Wandungsbereichs ist etwa konstant oder weist geringere Wandstärkenunterschiede aufweist als der lichtdurchlässige Wandungsbereich.

## Patentansprüche

1. Optische Anzeigeeinrichtung (1), insbesondere zum Einsatz in einem Kraftfahrzeug, mit einem Trägerteil (2), das ein Symbol oder dergleichen Dekor (3) aufweist, und mit mindestens einem Leuchtmittel (5) zum Hinterleuchten des Dekors (3), wobei die Wandung des Trägerteils (2) im Bereich des Dekors (3) lichtdurchlässig und in dem seitlich an das Dekor (3) angrenzenden Bereich lichtundurchlässig ist, wobei der lichtdurchlässige Wandungsbereich des Trägerteils (2) an seiner Rückseite mindestens eine im Abstrahlbereich des Leuchtmittels (5) angeordnete Lichteintrittsfläche (6) hat, die im Wesentlichen in dem von dem Dekor (3) überdeckten Bereich angeordnet ist und bezüglich ihrer Kontur an die Kontur des Dekors (3) formangepasst ist, wobei der lichtdurchlässige Wandungsbereich an voneinander beabstandeten Stellen unterschiedliche Wandstärken aufweist, und wobei die Wandstärke des seitlich dazu benachbarten lichtundurchlässigen Wandungsbereichs etwa konstant ist oder geringere Wandstärkenunterschiede aufweist als der lichtdurchlässige Wandungsbereich.

2. Optische Anzeigeeinrichtung (1) nach Anspruch 1, **dadurch gekennzeichnet, dass** der lichtdurchlässige Wandungsbereich aus einem diffustransparenton Werkstoff besteht, und dass die optische Dämpfung des Werkstoffs und der Verlauf der Wandstärke in dem lichtdurchlässigen Wandungsbereich derart auf die Abstrahlcharakteristik des Leuchtmittels (5) und die Lage des Leuchtmittels (5) relativ zu der Lichteintrittsfläche (6) abgestimmt sind, dass das Dekor (3) von dem Licht des Leuchtmittels (5) etwa homogen ausgeleuchtet wird.

3. Optische Anzeigeeinrichtung (1) nach Anspruch 1 oder 2, **dadurch gekennzeichnet, dass** der lichtdurchlässige Wandungsbereich an wenigstens einer Stelle eine größere Wandstärke aufweist als der seitlich an das Dekor (3) angrenzende Randbereich des lichtundurchlässigen Wandungsbereichs,

4. Optische Anzeigeeinrichtung (1) nach einem der Ansprüche 1 bis 3, **dadurch gekennzeichnet, dass** der lichtdurchlässige Wandungsbereich an wenigstens einer Stelle eine geringere Wandstärke aufweist als der seitlich an das Dekor (3) angrenzenden Randbereich des lichtundurchlässigen Wandungsbereichs.

5. Optische Anzeigeeinrichtung (1) nach einem der Ansprüche 1 bis 4, **dadurch gekennzeichnet, dass** die Lichteintrittsfläche (6) stufen- und/oder reliefförmig ausgebildet ist, und dass die Oberflächenebenen der Stufen oder des Reliefs vorzugsweise etwa parallel zur Erstreckungsebene des Trägerteils (2) angeordnet sind.

6. Optische Anzeigeeinrichtung (1) nach einem der Ansprüche 1 bis 5, **dadurch gekennzeichnet, dass** die Ebenen der Stufen und/oder des Reliefs in unterschiedlichen Abständen zueinander angeordnet sind.

7. Optische Anzeigeeinrichtung (1) nach einem der Ansprüche 1 bis 6, **dadurch gekennzeichnet, dass** das Dekor (3) mindestens einen streifenförmigen Abschnitt aufweist, dass das Trägerteil (2) an seiner Rückseite eine dem streifenförmigen Abschnitt gegenüberliegende und dessen Verlauf folgende stegförmige Ausformung aufweist, und dass die Oberfläche der Ausformung die Lichteintrittsfläche (6) bildet.

8. Optische Anzeigeeinrichtung (1) nach einem der Ansprüche 1 bis 7, **dadurch gekennzeichnet, dass** das Dekor (3) mindestens einen streifenförmigen Abschnitt aufweist, dass das Trägerteil (2) an seiner Rückseite eine dem streifenförmigen Abschnitt gegenüberliegende und dessen Verlauf folgende nuten- oder grabenförmige Einformung aufweist, und dass die Oberfläche der Einformung die Lichteintrittsfläche (6) bildet.

9. Optische Anzeigeeinrichtung (1) nach einem der Ansprüche 1 bis 8, **dadurch gekennzeichnet, dass** das Trägerteil (2) einen Grundkörper aus transparentem Kunststoff aufweist, der zur Bildung des lichtundurchlässigen Wandungsbereichs an seiner Oberfläche bereichsweise mit mindestens einer lichtundurchlässigen Beschichtung versehen ist, die in dem lichtdurchlässigen Wandungsbereich unterbrochen ist.

10. Optische Anzeigeeinrichtung (1) nach einem der Ansprüche 1 bis 9, **dadurch gekennzeichnet, dass** das Trägerteil (2) als Betätigungselement für einen Taster oder Schalter ausgebildet und dass das Trägerteil (2) dazu bewegbar mit einem Gehäuseteil (4) verbunden ist.
